# EUROPÄISCHE PATENTANMELDUNG

(11) **EP 2 058 675 A2**
(43) Veröffentlichungstag der Anmeldung: **13.05.2009**
(21) Anmeldenummer: 08012439.9
(22) Anmeldetag: 10.07.2008
(51) Int. Cl.: G01S 15/93, G01S 13/00

(54) **Anordnung von Ecksensoren in einem Parkassistenzsystem für Fahrzeuge**

(30) Priorität: 07.11.2007 DE 102007052977
(71) Anmelder: Valeo Schalter und Sensoren GmbH, 74321 Bietigheim-Bissingen (DE)
(72) Erfinder: Hoffsommer, Klaus, 74321 Bietigheim-Bissingen (DE)

(57) **Zusammenfassung**

Es wird eine Anordnung von Ecksensoren in einem Parkassistenzsystem für Fahrzeuge (1) vorgeschlagen, bei der eine Mehrzahl von Sensoren (4,5,6) in einer vorderen und/oder einer hinteren Detektoranordnung (2,3) angeordnet sind, die Abstände zu Hindernissen durch direkte oder indirekte Messung erfassen. Zusätzlich zu mindestens einem Ecksensor (5) in der vorderen und/oder hinteren Detektoranordnung (2,3) ist mindestens ein vertikal zu diesem Ecksensor (5) versetzter weiterer Ecksensor (6) vorhanden, wobei ein Ecksensor (5,6) als Sender und der zusätzliche Ecksensor (5,6) als Empfänger dient.

## Beschreibung

### Stand der Technik

Die Erfindung betrifft eine Anordnung von Ecksensoren in einem Parkassistenzsystem für Fahrzeuge, die während des Parkvorgangs in eine begrenzte hindernisbehaftete Parklücke bewegt werden, nach der Gattung des Hauptanspruchs.

Es ist beispielsweise aus der DE 10 2004 029 038 A1 ein Parkassistenzsystem zur Unterstützung des Einparkens von Fahrzeugen bekannt, bei dem Informationsdaten über Hindernisse oder Abstellflächenbegrenzungen mit Ultraschallsensoren an dem zu parkenden Fahrzeug gewonnen werden. Die Hindernisinformationen werden erzeugt, während das zu abzustellende Fahrzeug in der Nähe des Abstellbereichs, bzw. am Abstellbereich vorbeibewegt wird.

Zur Gewinnung der notwendigen Informationen werden beim Stand der Technik insbesondere Abstandsdaten zu Hindernissen, z.B. mit den Ultraschallsensoren, im Umgebungsbereich des Fahrzeugs ermittelt. Zur Ausführung des Parkassistenzsystems werden dann noch Geschwindigkeitsdaten, z.B. aus dem Antriebssystem oder aus entsprechenden Sensoren am Fahrzeug, Lenkwinkel- und Getriebestellungen ebenfalls aus einer entsprechend in den meisten Fahrzeugen üblicherweise auch für andere Steuerungsvorgänge eingesetzten Sensorik ausgewertet.

Entsprechende Steuersignale für das Hilfssystem zum Parken werden dann nach der erfolgten Auswertung der Sensordaten an eine Lenkunterstützungs- und/oder Geschwindigkeitsautomatik im Fahrzeug weitergeleitet. Für sich gesehen ist aus dem eingangs erwähnten Stand der Technik auch noch bekannt, wie geeignete Ultraschallsensoren am Fahrzeug angebracht werden können und wie die Einzelsensoren mit einem im wesentlichen kreisförmigen Abstandsquerschnitt die Umgebung abtasten können.

Es ist bei solchen Parkassistenzsystemen üblich, dass die Ultraschallsensoren bei einem Fahrzeug beispielsweise im vorderen und im hinteren Stoßfängerbereich in einer horizontalen Linie angeordnet angebracht werden. Der Messbereich dieser Anordnung setzt sich zusammen aus den Messbereichen der einzelnen Sensoren bei einer direkten Messung, das heißt ein Sensor ist gleichzeitig Sender und Empfängen, plus der Messbereiche von Sensorpaaren bei einer indirekten Messung, die der ein Sensor als Sender und ein zweiter Sensor als Empfänger fungiert.

Hindernisobjekte bei einem Parkvorgang, die sich nicht auf der horizontalen Ebene der Sensorposition befinden, werden bei den bekannten Anordnungen oft mit einem zu großen Abstand angezeigt, da ein einzelner Sensor keine vertikale Winkelinformation über ein erkanntes Objekt liefert. Eine eventuelle vorgesehene trigonometrische Verrechnung von zwei Abstandsinformationen von horizontal nebeneinander angeordneten Sensoren, beispielsweise durch die sogenannte Triangulation, kann nur eine Winkelinformation in der Horizontalen liefern, wobei sich dieser Abstandsfehler vor allem im für einen Parkvorgang wichtigen Nahbereich des Fahrzeugs auswirkt.

### Darstellung der Erfindung

Die Erfindung geht von einer Anordnung von Ecksensoren in einem Parkassistenzsystem für Fahrzeuge aus, bei der eine Mehrzahl von Sensoren in einer vorderen und/oder einer hinteren Detektoranordnung angeordnet sind, die Abstände zu Hindernissen durch direkte oder indirekte Messung erfassen. Gemäß der Erfindung ist in vorteilhafter Weise zu mindestens einem Ecksensor in der vorderen und/oder hinteren Detektoranordnung mindestens ein vertikal zu diesem Ecksensor versetzter weiterer Ecksensor angebracht.

Nach der Erfindung dient in an sich bekannter Weise ein Ecksensor als Sender und der zusätzliche Sensor als Empfänger; vorzugsweise handelt es sich hierbei um Ultraschallsensoren. Mit einer entsprechenden elektronischen Auswerteeinrichtung kann dann eine indirekte Auswertung mindestens eines Sensorpaares der Ecksensoren als Sender und Empfänger zur indirekten Ermittlung der Abstandswerte des Fahrzeugs zu einem Hindernis durchgeführt werden.

### Kurze Beschreibung der Zeichnung

Ein Ausführungsbeispiel der Erfindung wird anhand der Figuren der Zeichnung erläutert. Es zeigen:
- Figur 1: zeigt eine schematische Draufsicht eines Fahrzeugs mit SensoRen zur Abstandsbestimmung und
- Figur 2: eine Ansicht eines Fahrzeugs von vorn mit erfindungsgemäßen jeweils zusätzlichen vertikal versetzten Ecksensoren.

### Wege zur Ausführung der Erfindung

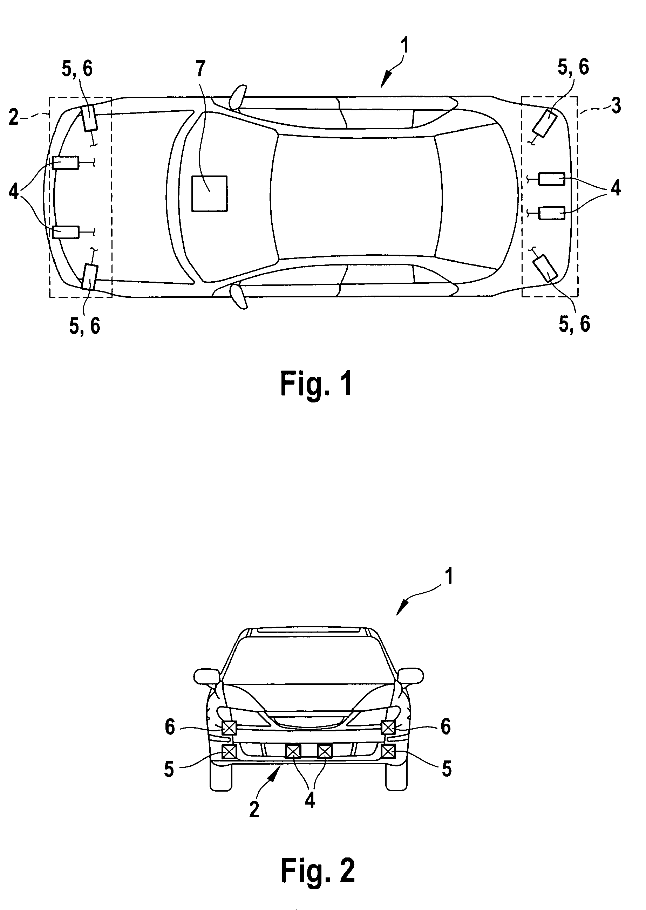

Aus Figur 1 ist ein Fahrzeug 1 zu entnehmen, das in der Nähe von hier nicht näher gezeigten Hindernissen abgestellt werden soll. Aus dem eingangs erwähnten Stand der Technik DE 10 2004 029 038 A1 ist hierzu bekannt, dass jeweils eine Detektoranordnung 2 an der Vorderseite und eine Detektoranordnung 3 an der Hinterseite des Fahrzeugs 1 mit Sensoren 4 und Ecksensoren 5, beispielsweise Ultraschallsender und/oder -empfänger, angebracht ist. Mit den Detektoranordnungen 2 und 3 sollen Abstandswerte zu den Hindernissen bei einem Park- oder Abstellvorgang erfasst werden. Weiterhin sind zusätzlich zu den Ecksensoren 5 noch vertikal zu diesen versetzte Ecksensoren 6 angebracht, die aus Figur 2 in der Ansicht der vorderen Detektoranordnung 2 erkennbar sind. Die Ecksensoren 5 und 6 können hierbei als Sensorpaar für eine indirekte Messung angewendet werden, bei dem ein Ecksensor als Sender und der zweite Ecksensor als Empfänger dient.

Die Sensoren 4 und die Ecksensoren 5 und 6 der Detektoranordnungen 2 und 3 sind über entsprechende Kommunikationskanäle (z.B. CAN-Bus) mit einer in der Regel computergesteuerten Auswerteeinheit 7 im Fahrzeug 1 verbunden, die aus den Abstandsdaten der Sensoren 4 und Ecksensoren 5 und 6 sowie den fahrzeugspezifischen Daten, wie zum Beispiel Geschwindigkeit und Lenkwinkel, ein Parkassistenzsystem für das Fahrzeug 1 bereitstellt, mit dem der zuvor erwähnte Park- oder Abstellvorgang durchführbar oder unterstützbar ist.

## Patentansprüche

1. Anordnung von Ecksensoren in einem Parkassistenzsystem für Fahrzeuge (1), bei der eine Mehrzahl von Sensoren (4,5,6) in einer vorderen und/oder einer hinteren Detektoranordnung (2,3) angeordnet sind, die Abstände zu Hindernissen durch direkte oder indirekte Messung erfassen, **dadurch gekennzeichnet, dass** zusätzlich zu mindestens einem Ecksensor (5) in der vorderen und/oder hinteren Detektoranordnung (2,3) mindestens ein vertikal zu diesem Ecksensor (5) versetzter weiterer Ecksensor (6) vorhanden ist, wobei ein Ecksensor (5,6) als Sender und der zusätzliche Ecksensor (5,6) als Empfänger dient.

2. Anordnung nach Anspruch 1, **dadurch gekennzeichnet, dass** mit einer Auswerteeinrichtung (7) eine indirekte Auswertung mindestens eines Sensorpaares der Ecksensoren (5,6) als Sender und Empfänger zur indirekten Ermittlung der Abstandswerte des Fahrzeugs (1) zu einem Hindernis durchführbar ist.

3. Anordnung nach Anspruch 1 oder 2, **dadurch gekennzeichnet, dass** die Sensoren (4,5,6) Ultraschallsensoren sind.
